# EUROPÄISCHE PATENTSCHRIFT

(11) **EP 1 131 012 B1**
(45) Veröffentlichungstag und Bekanntmachung des Hinweises auf die Patenterteilung: **01.06.2005**
(21) Anmeldenummer: 99955986.7
(22) Anmeldetag: 12.11.1999
(51) Int. Cl.: A61C 5/02, B24B 19/02

(54) **WURZELKANALINSTRUMENT UND VERFAHREN ZU DESSEN HERSTELLUNG**
ROOT CANAL INSTRUMENT AND METHOD FOR THE PRODUCTION THEREOF
INSTRUMENT POUR CANAL RADICULAIRE ET PROCEDE PERMETTANT DE LE PRODUIRE

(30) Priorität: 17.11.1998 DE 19852931
(43) Veröffentlichungstag der Anmeldung: 12.09.2001
(73) Patentinhaber: Gebr. Brasseler GmbH & Co. KG, D-32657 Lemgo (DE)
(72) Erfinder: HOPPE, Wolfgang, D-48161 Münster (DE); SCHÄFER, Edgar, D-48329 Havixbeck (DE); TEPEL, Joachim, D-48161 Münster (DE)
(74) Vertreter: Weber, Joachim, Dr.
(86) Internationale Anmeldenummer: PCT/EP1999/008731
(87) Internationale Veröffentlichungsnummer: WO 2000/028915

(56) Entgegenhaltungen:
- DE-A- 3 805 580
- DE-A- 19 723 695
- US-A- 4 332 561
- US-A- 5 464 362

## Beschreibung

Die Erfindung betrifft ein zahnärztliches Wurzelkanalinstrument entsprechend dem Oberbegriff des Anspruchs 1 sowie ein Herstellungsverfahren für ein Wurzelkanalinstrument.

Derartige Wurzelkananlinstrumente eines ersten Typs sind aus der Praxis als "Reamer" oder Feilen bekannt. Der Arbeitsteil gattungsgemäßer Wurzelkanalinstrumente ist beispielsweise aus einem gleichmäßig verdrillten Stab mit dreieckigem oder viereckigem Querschnitt gebildet, so daß ein durch den Arbeitsteil gelegter Querschnitt jeweils drei oder vier um den Instrumentenumfang verteilte Schneidkanten aufweist, wobei sich die Schneidkanten bis zur Spitze des Instrumentes erstrecken.

Diese gattungsgemäßen Instrumente werden dazu benutzt, infizierte Wurzelkanäle zu reinigen und dabei möglichst gleichmäßig zirkumferent um den Wurzelkanal einen Materialabrieb in der Zahnwurzel zu erzeugen. Da diese dem Wurzelkanal benachbarten Bereiche der Zahnwurzel infiziert sein können, ist wünschenswert, daß möglichst überall um den ursprünglichen freien Querschnitt des Wurzelkanales herum Zahnmaterial abgetragen wird.

Diese gattungsgemäßen Wurzelkanalinstrumente bewirken aufgrund ihrer Eigensteifigkeit nicht nur den größeren Materialabtrag an der Außenseite der Biegung des Wurzelkanals, sondern weisen den Nachteil auf, daß sie in diesem Bereich ausschließlich den Außenbereich bearbeiten, während am Kurveninneren dieses gekrümmten Wurzelkanalbereiches kein Abrieb erfolgt, so daß hier Infektionsherde verbleiben können.

Diese gattungsgemäßen Wurzelkanalinstrumente weisen Schneidkantenwinkel von weniger als 45° auf, d.h. die Verdrillung der mehreckigen Querschnitte ist derart erfolgt, daß der Winkel der Schneidkante zur Längsachse des Wurzelkanalinstrumentes geringer als 45° liegt. Daraus resultiert eine Arbeitsweise, bei der im wesentlichen durch die Drehung des Instrumentes der Materialabtrag im Wurzelkanal erfolgt, wobei gleichzeitig auch ein Vorschub des Instrumentes erfolgt.

Gattungsgemäße Wurzelkanalinstrumente eines zweiten Typs sind als sogenannte "Hedströmfeilen" bekannt. Bei ihnen weist der Arbeitsteil eine einzige gewendelte Schneidkante auf, so daß an jedem durch den Arbeitsteil gelegten Querschnitt lediglich eine einzige Schneidkante ersichtlich ist. Der Schneidkantenwinkel beträgt hier mehr als 45° und liegt zwischen 45° und 90°. Demzufolge ist mit diesem Instrument eine Arbeitsweise verbunden, bei der das Instrument in seiner Längsrichtung vor- und zurückbewegt wird, wie dies bei der Handhabung von Feilen im holz- oder metallbearbeitenden Bereich bekannt ist.

Diese Wurzelkanalinstrumente des zweiten Typs erzeugen bei einer derartigen Arbeitsweise ebenfalls keinen Abrieb an der Kurveninnenseite des gebogenen Bereiches des Wurzelkanales und weisen zudem den Nachteil auf, daß gegenüber der äußeren Querschnittskontur des Arbeitsbereiches der innere Kern einen sehr viel geringeren Querschnitt aufweist, so daß diese Instrumente bruchempfindlich sind, wenn sie ähnlich wie der erstgenannte Instrumententyp drehend betätigt werden.

Aus der DE 38 05 580 A1 ist ein Zahnwurzelbearbeitungsinstrument bekannt, dessen Spitze halbkugelförmig abgerundet ist. Es liegt somit kein Führungsabschnitt vor. Weiterhin erstrecken sich die beiden Schneiden bis in den Spitzenbereich.

Die US 4,332,561 betrifft ein Wurzelkanalinstrument, welches eine halbkugelförmige Spitze aufweist, an welches sich ein zylindrischer Ansatz geringen Durchmessers anschließt. Es ist somit kein Führungsabschnitt mit lediglich einer Schneide gezeigt.

Ein weiteres Wurzelkanalinstrument ist aus der US 5,464,362 vorbekannt. Die Spitze dieses Werkzeugs ist wie bei einem Bohrer kegelförmig ausgebildet, das Werkzeug weist zwei Schneiden auf.

Der vorliegenden Erfindung liegt die Aufgabe zugrunde, ein gattungsgemäßes Wurzelkanalinstrument dahingehend zu verbessern, daß dieses eine möglichst wirksame Arbeit, also einen möglichst wirksamen Materialabtrag an den gewünschten Stellen des Wurzelkanales ermöglicht und einen möglichst guten Schutz vor ungewolltem Materialabtrag sicherstellt.

Weiterhin liegt der Erfindung die Aufgabe zugrunde, ein Verfahren zur Herstellung des erfindungsgemäßen Wurzelkanalinstrumentes zu schaffen, welches unter hoher Präzision einfach und kostengünstig durchführbar ist.

Die Aufgabe wird erfindungsgemäß durch ein Wurzelkanalinstrument mit den Merkmalen des Anspruchs 1 gelöst, die Unteransprüche zeigen weitere vorteilhafte Ausgestaltungen der Erfindung. Weiterhin wird die Aufgabe durch das Verfahren mit den Merkmalen des nebengeordneten Anspruchs gelöst, auch die untergeordneten Verfahrensansprüche zeigen vorteilhafte Ausgestaltungen des erfindungsgemäßen Verfahrens.

Die Erfindung schlägt mit anderen Worten hinsichtlich des erfindungsgemäßen Wurzelkanalinstrumentes eine Ausgestaltung des Arbeitsteiles vor, die drei unterschiedliche Bereiche umfaßt: Zunächst die kuppenartig gerundete und demzufolge schneidenlose Spitze des Arbeitsteiles (1. Abschnitt), anschließend den Führungsabschnitt (2. Abschnitt), der eine einzige Schneide aufweist, und zwar auf ausschließlich maximal 180° seines Umfanges, so daß mit dieser Schneidenanordnung eine sehr zielgerichtete Beeinflussung der abtragenden Wirkung mit dem Wurzelkanalinstrument erzielt werden kann und dementsprechend eine sehr gezielte Bearbeitung der Kanalwandung an der Innenseite von Biegungen erfolgen kann, und schließlich der den größten Teil des Arbeitsteiles ausmachende Abschnitt (3. Abschnitt), in welchem der Arbeitsteil zwei oder mehr Schneiden aufweist und eine dementsprechend effiziente Abtragungsleistung ermöglicht. Dadurch, daß die Schneiden schraubenartig umlaufend ausgestaltet sind, ergibt sich ein großer Spanraum zur Aufnahme des abgetragenen Materials, wodurch die Effizienz des Wurzelkanalinstrumentes unterstützt wird.

Da dieser dritte Abschnitt des Arbeitsteiles die größte Länge des Arbeitsteiles ausmacht, kann davon gesprochen werden, daß der Arbeitsteil "grundsätzlich" mit zwei oder mehr Schneiden ausgestaltet ist, wobei abweichend von dieser Grundsätzlichkeit der Führungsabschnitt und die Spitze des Arbeitsteiles, wie bereits beschrieben, mit lediglich einer Schneide (im Führungsabschnitt) oder ohne jede Schneide (an der Spitze) ausgestaltet sind. Der Führungsabschnitt kann, abhängig vom Durchmesser des Arbeitsteils, eine sehr geringe Länge aufweisen, z.B. bei kleinen ISO-Größen eine Länge von ca. 1 mm. Dennoch wird durch die Schneidenanordnung auf dem Führungsabschnitt auch bei kurzen Längen dieses Abschnitts der gewünschte Führungscharakter ermöglicht, der einen Materialabtrag an der inneren Wandung des gekrümmten Bereiches eines Wurzelkanals exakt zu steuern ermöglicht.

Es kann eine ungleichmäßig um den Umfang des Arbeitsteils verteilte Anordnung mit grundsätzlich zwei oder mehr Schneiden vorgesehen sein: beispielsweise kann einander vergleichsweise nah benachbarten Schneiden ein schneidenloser Bereich des Umfangs des Arbeitsteils diametral gegenüberliegen. Das Wurzelkanalinstrument kann sich mit diesem schneidenlosen Umfangsbereich großflächig an die Wandung des Wurzelkanals anlegen und einen Abstützeffekt bewirken, der eine besonders effiziente Abtragungsarbeit der umfangsmäßig gegenüberliegenden Schneiden an der Wandung des Wurzelkanals ermöglicht. Außer dieser Effizienzsteigerung kann eine derartige Anordnung der Schneiden eine sicherere Steuerung des Materialabtrags ermöglichen, wenn Material lediglich an einem bestimmten Umfangsbereich des Wurzelkanals abgetragen werden soll.

Wenn lediglich grundsätzlich zwei Schneiden vorgesehen sind, ergibt sich im Vergleich zur Anordnung mehrerer Schneiden erstens ein höherer Anpreßdruck für die beiden Schneiden und damit eine größere Arbeitsleistung, sowie zweitens je nach Ausgestaltung des Querschnittsprofils des Arbeitsteils ein sehr großer Spanraum zur Aufnahme und ggf. zum Abtransport des abgetragenen Materials, wodurch die Wirksamkeit der Schneiden weiter unterstützt wird.

Die Anordnung von grundsätzlich drei Schneiden, die an dem Umfang des Arbeitsteils gleichmäßig voneinander beabstandet sind, kann vorgesehen sein, um einen praxisnahen, guten Kompromiß in der Erfüllung unterschiedlicher, teils widersprüchlicher Anforderungen zu erzielen:
Erstens ist die Anzahl der Schneiden ausreichend klein für einen guten Anpreßdruck der Schneiden und damit für eine gute Effizienz des Wurzelkanalinstruments,
zweitens ist der Spanraum ausreichend groß zum Abtransport des abgetragenen Materials, damit eine gute Effizienz des Wurzelkanalinstruments unterstützend,
drittens kann die Querschnittskontur des Arbeitsteils vergleichsweise massiv ausgebildet werden, was die Lebensdauer des Wurzelkanalinstruments erhöht sowie dessen Bruchempfindlichkeit und damit das Verletzungsrisiko für den Patienten verringert,
und viertens ermöglicht diese Anordnung ein preiswertes Herstellungsverfahren des Arbeitsteils, indem dieser aus einem verdrillten Stabmaterial mit dreieckigem und viereckigem Querschnitt erzeugt werden kann.

Im folgenden wird die Erfindung anhand eines Ausführungsbeispiels sowohl hinsichtlich des Wurzelkanalinstruments als auch hinsichtlich des Verfahrens anhand der Zeichnungen erläutert. Dabei zeigt:
- Fig. 1: eine rein schematische Ansicht auf den Bereich der Spitze und den spitzennahen Bereich des Arbeitsteiles eines Wurzelkanalinstrumentes,
- Fig. 2 - 4: Querschnitte durch den Arbeitsteil von Fig. 1 entlang der mit II - IV gekennzeichneten Schnittebenen,
- Fig. 5: eine perspektivische Seitenansicht eines Ausgangsmaterials zur Herstellung des Wurzelkanalinstruments,
- Fig. 6: eine vereinfachte Seitenansicht eines Rohlings für das erfindungsgemäße Wurzelkanalinstrument,
- Fig. 7: eine vereinfachte Darstellung des Bearbeitungsvorganges zur Herstellung des erfindungsgemäßen Wurzelkanalinstruments,
- Fig. 8: eine Schnittansicht durch den Arbeitsteil, analog der Darstellung von Fig. 7, nach einem ersten Bearbeitungsabschnitt,
- Fig. 9: eine Schnittansicht, ähnlich Fig. 8, nach einem zweiten Bearbeitungsabschnitt,
- Fig. 10: eine Schnittansicht, ähnlich den Figuren 8 und 9, nach einem dritten Bearbeitungsabschnitt,
- Fig. 11: eine vergrößerte, schematische Darstellung der Spitze des in Fig. 7 gezeigten Wurzelkanalinstruments, und
- Fig. 12: eine vereinfachte Schnittansicht einer Zahnwurzel mit Wurzelkanal unter Einsatz des erfindungsgemäßen Wurzelkanalinstruments.

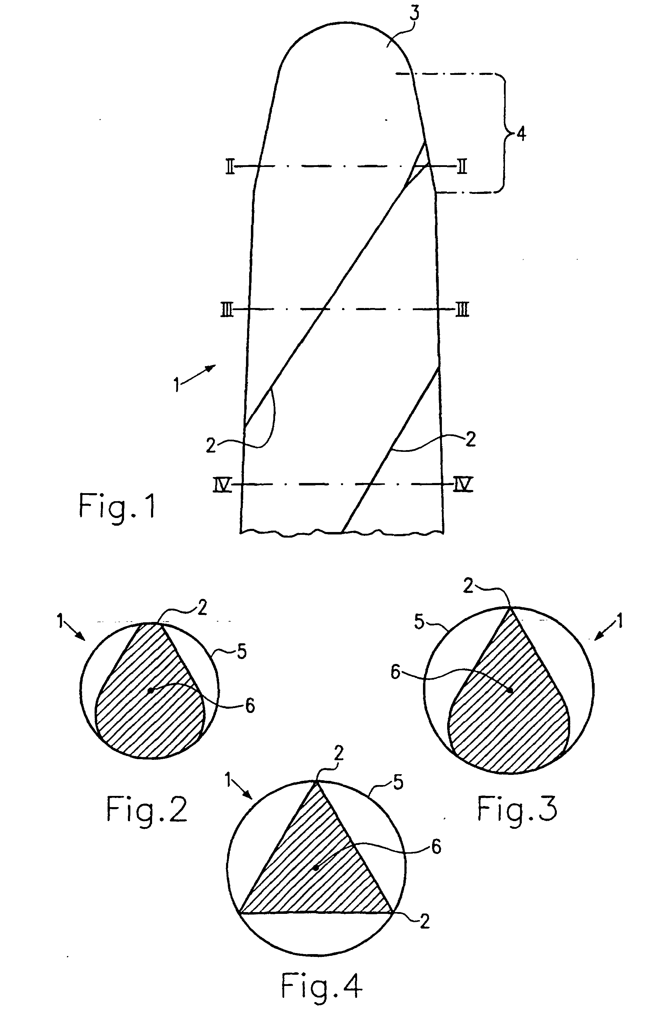

In Fig. 1 ist mit 1 allgemein der Arbeitsteil eines zahnärztlichen Wurzelkanalinstrumentes bezeichnet, wobei dieser Arbeitsteil 1 an seinem Umfang mit Schneiden 2 versehen ist, die schraubenförmig um den Arbeitsteil 1 umlaufen und die rein schematisch angedeutet sind.

Das freie Ende des Arbeitsteiles 1 ist als "Spitze" 3 bezeichnet, wobei diese Bezeichnung traditionell übernommen ist und die Spitze 3 tatsächlich nicht spitz, sondern kuppenartig gerundet ausgestattet ist, beispielsweise kugelsegmentförmig.

Der Arbeitsteil 1 weist eine Konizität auf, die über den größten Teil seiner Länge gleichbleibend ausgestattet ist. Im Anschluß an die Spitze 3 jedoch weist der Arbeitsteil 1 einen Übergangsbereich 4 auf, der eine wesentlich stärkere Konizität aufweist. An den Übergangsbereich 4 schließt sich auf dem von der Spitze 3 entfernten Ende des Übergangsbereiches 4 der Abschnitt des Arbeitsteiles 1 mit seiner üblichen Konizität an.

Innerhalb des Übergangsbereiches 4 ist lediglich eine Schneide 2 angeordnet, da dieser Übergangsbereich 4 Teil eines Führungsabschnittes 7 ist, in welchem der Arbeitsteil 1 auf lediglich 180° seiner Umfangsfläche mit einer einzigen Schneide 2 versehen ist. Aufgrund der starken Konizität im Übergangsbereich 4 ist hier die an sich scharfkantige Schneide 2 angeschrägt, wie sich aus Fig. 1 entlang der Schittlinie II, insbesondere jedoch aus der gemäß Fig. 2 entlang dieser Querschnittslinie II gelegten Querschnittsansicht ergibt: Dabei ist ersichtlich, daß lediglich eine Schneide 2 am Umfang ausgeformt wird, wobei diese Schneide 2 nicht bis zu einer spitzen Schneidkante verläuft, sondern aufgrund der starken Konizität im Übergangsbereich 4 abgestumpft ist.

Der der Schneide 2 gegenüberliegende Bereich ist kreissegmentartig abgerundet, so daß sich hier ein sehr großflächiges Widerlager für das Wurzelkanalinstrument an der Wandung des Wurzelkanals ergibt, so daß durch dieses große Widerlager die Wirksamkeit der einzigen Schneide 2 unterstützt wird und das unerwünschte Eindringen des Wurzelkanalinstrumentes in die Bereiche der Wurzelkanalwandung, die nicht bearbeitet werden sollen, wirksam verhindert wird.

An den aus Fig. 1 ersichtlichen Übergangsbereich 4 schließt sich der weitere Teil des Führungsabschnittes 7 an, wobei ein Querschnitt entlang der Schnittlinie III aus Fig. 3 ersichtlich ist. Hier ist die bereits aus Fig. 2 ersichtliche Schneide 2 mit ihrer scharfkantigen Wirkspitze erkennbar, wobei auch hier ersichtlich ist, daß am Umfangsbereich des Arbeitsteiles 1 im Bereich des Führungsabschnittes 7 lediglich eine einzige Schneide 2 ausgebildet ist. Auch hier ergibt sich der Schneide 2 gegenüberliegend ein großflächiger und abgerundet verlaufender Umfangsbereich des Arbeitsteiles 1, so daß auch hier ein großflächiges Widerlager bei der Bearbeitung eines Wurzelkanales 8 geschaffen wird. Das Widerlager bewirkt ausschließlich einen Materialabtrag in dem mit der Schneide 2 bearbeiteten Bereich, so daß der Arzt, der das Wurzelkanalinstrument handhabt, sehr genau steuern kann, an welchem Umfangsbereich des Wurzelkanales 8 ein derartiger Materialabtrag erfolgen soll.

Weiterhin wird durch die einzige vorhandene Schneide 2 ein sehr großer Spanraum geschaffen, wie sich aus der in den Fig. 2 und 3 dargestellten Kreislinie 5 ergibt: Diese Kreislinie 5 beschreibt den Kreis um einen Mittelpunkt 6 des Arbeitsteiles 1, innerhalb dessen der Querschnitt des Arbeitsteiles 1 angeordnet ist, so daß diese Kreislinie 5 etwa dem Lumen des Wurzelkanales 8 entspricht, welches durch den Arbeitsteil 1 ausgefüllt wird. Der große vorgesehene Spanraum ermöglicht die zuverlässige Aufnahme und ggf. ein Abführen des abgetragenen Materials, so daß sich das Wurzelkanalinstrument nicht zusetzt und an Effizienz einbüßt. Insbesondere wird dieser große freie Spanraum dadurch geschaffen, daß der Querschnitt des Arbeitsteiles aus einer grundsätzlich dreieckigen Kontur des den Arbeitsteil 1 bildenden Stabmaterials gewonnen ist.

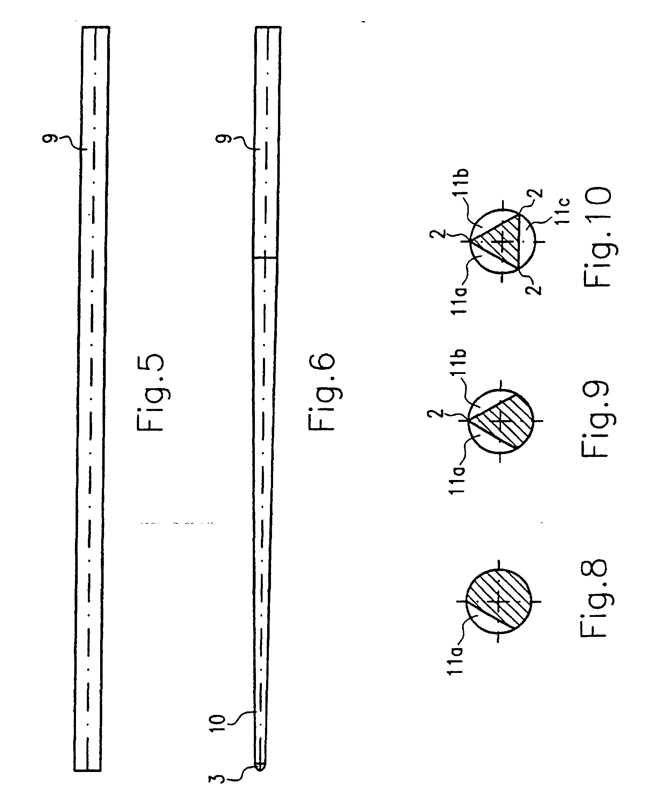

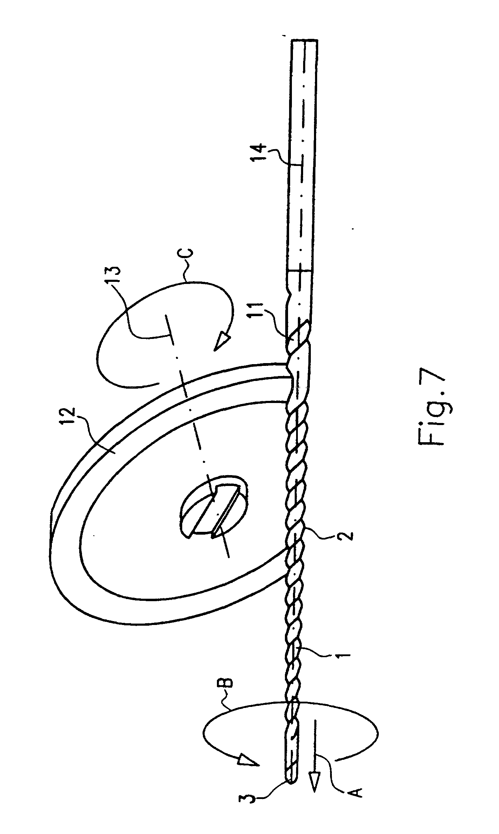

Aus Fig. 4 ergibt sich entsprechend der Schnittlinie IV in Fig. 1 ein Querschnitt durch den längsten Abschnitt des Arbeitsteiles 1, der sich zwischen dem Führungsabschnitt und dem nicht dargestellten Handhabungsteil des Wurzel.kanalinstrumentes befindet. Dieser Handhabungsteil kann als Griff ausgestattet sein oder als an eine Bearbeitungsmaschine anschließbarer Anschlußteil. In diesem größten Abschnitt des Arbeitsteiles 1 weist dieser einen dreieckigen Querschnitt auf mit drei an seinem Umfang gleichmäßig versetzt angeordneten Schneiden 2, wobei die in Fig. 5 dargestellte Kreislinie 5 aufgrund der schraubenförmig gewendelt verlaufenden Schneiden 2 die äußere Umfangskontur des Arbeitsteiles 1 in diesem größten Abschnitt seiner Länge darstellt. Aus den unterschiedlichen Durchmessern der Kreislinien 5 in den Fig. 2 bis 4 ist die Konizität des Arbeitsteiles 1 ersichtlich.

Die Fig. 5 bis 11 zeigen jeweils einzelne Arbeitsabschnitte zur Herstellung des erfindungsgemäßen Wurzelkanalinstruments.

Zunächst ist in Fig. 5 in schematischer Weise ein Ausgangsmaterial dargestellt, welches in Form eines Zylinders ausgebildet ist, der beispielsweise 50 mm lang sein kann. Er wird aus einer Stange oder aus einem Ring entweder aus einem-nicht rostenden Federstahl oder einer Nickel-Titan-Legierung hergestellt. Die Herstellung kann durch ein Umformverfahren oder durch ein spanendes Verfahren, beispielsweise Schleifen erfolgen.

In einem darauf folgenden Arbeitsschritt (siehe Fig. 6) wird ein Rohling angefertigt. Die Spitze 3 des Rohlings wird zunächst kegelstumpfartig angeschliffen und nachfolgend abgerundet, sowie dies in der vorhergehenden Beschreibung erläutert wurde. Weiterhin erhält der Rohling einen kegelstumpfartigen Anschliff analog den vorstehenden Ausführungen, wobei sowohl die Konusform des Übergangsbereichs 4 als auch des Führungsabschnitts 7 (siehe Fig. 1) ausgebildet wird. Somit entspricht sowohl die Länge als auch der jeweilige Konuswinkel des konischen Bereichs den Abmessungen des späteren fertigen Wurzelkanalinstruments.

Die Fig. 7 zeigt in schematischer Weise die Herstellung der spiralförmigen Schneiden 2 und Nuten 11. Dabei erfolgt die Herstellung mittels einer drehbar gelagerten Schleifscheibe 12 in einem speziellen Tiefschleifprozeß. Der zuvor konisch geschliffene Bereich (siehe Fig. 6), welcher jeweils einen kreisförmigen Querschnitt aufweist, wird an der rotierenden Schleifscheibe 12 entlang geführt, während der Rohling um seine eigene Längsachse gedreht wird. Die Drehbewegung des Rohlings ist durch den Pfeil B dargestellt, während die Längsbewegung durch den Pfeil A gezeigt ist. Der Pfeil C zeigt die Drehung der Schleifscheibe um ihre feststehende Achse 12. Somit wird erfindungsgemäß eine spiralförmig um die Achse 14 verlaufende erste Nut 11 ausgebildet.

Die Fig. 8 zeigt eine Schnittansicht dieses Bearbeitungsvorganges. Es versteht sich, daß dieser Bearbeitungsvorgang entweder in einem Durchlauf oder in mehreren, aufeinander folgenden gleichartigen Durchläufen vorgenommen werden kann. Es wird somit eine spiralförmig um die Instrumentenachse 14 verlaufende Nut 11 bzw. Fläche (Fig. 8) ausgebildet, die sich über die gesamte Länge des konischen Bereichs erstreckt.

Nachfolgend zu diesem Bearbeitungsvorgang wird der Rohling indexiert. Dies bedeutet, daß die Lage der erzeugten Nut 11 exakt festgestellt und der Rohling danach ausgerichtet wird. Nachfolgend wird der Rohling erneut an der Schleifscheibe 12 entlang bewegt, wodurch eine zweite Nut 11 erzeugt wird. Diese ist in Fig. 9 im Schnitt dargestellt, wobei die erste Nut als 11a und die zweite Nut als 11b markiert sind. Es versteht sich auch hier, daß dieser Bearbeitungsvorgang entweder in einem Durchlauf durch die Schleifscheibe 12 vorgenommen werden kann oder in mehreren Durchläufen.

Wie sich insbesondere aus der Darstellung der Fig. 9 ergibt, wird zwischen den beiden Nuten 11a und 11b eine Schneide 2 ausgebildet.

Die Fig. 10 zeigt, daß bei nochmaligem Wiederholen des letzten Arbeitsvorganges eine dritte Nut 11c zur Erzeugung zweier weiterer Schneiden 2 ausgebildet sein kann. Im Rahmen der Erfindung ist jedoch auch eine viereckige oder eine fünfeckige oder eine beliebige polygonale Querschnittsform des Wurzelkanalinstruments möglich.

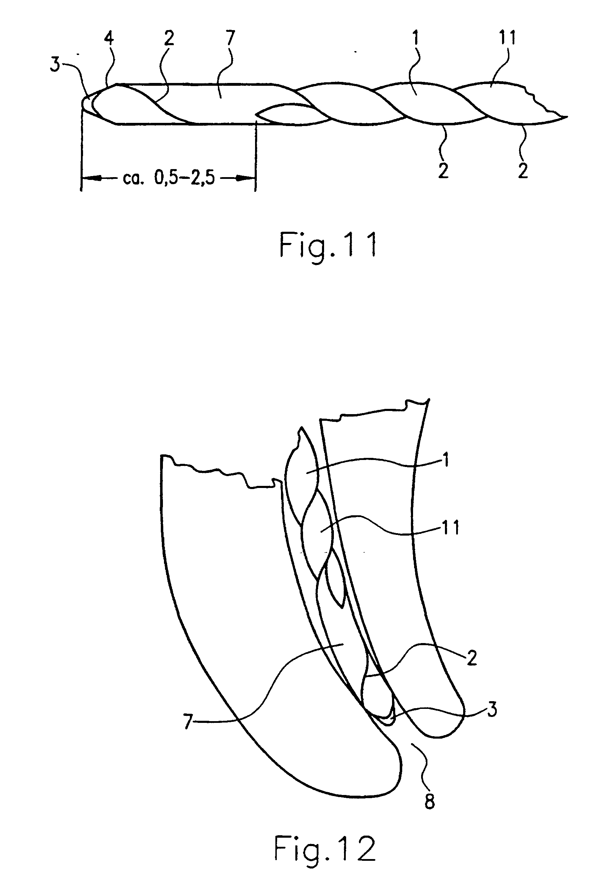

Beim Schleifen der zweiten und/oder der weiteren Spiral-Nuten 11 bleibt, wie in Fig. 11 gezeigt, zunächst eine Länge von ca. 1 mm im vorderen Teils des Rohlings unbearbeitet, bevor die Schleifscheibe 12 in den Bereich des Rohlings eintaucht. Hierdurch wird bewirkt, daß die drei- oder mehreckige Querschnittsform des Wurzelkanalinstruments erst nach einer Länge von ca. 1 mm ihre vollständige Ausprägung erhält. Im näheren Umfeld der Spitze 3 des Wurzelkanalinstruments entsteht somit ein ca. 0,5 - 2,5 mm langer Führungsabschnitt, der an der einen Seite keinen Materialabtrag bewirkt, an der anderen Seite jedoch abträgt und so für eine zuverlässige Aufbereitung gekrümmter Wurzelkanäle 8 sorgt. Die Querschnittsform der Fig. 9 zeigt beispielsweise eine derartige Ausgestaltung, bei welcher lediglich eine Schneide 2 vorgesehen ist, die einem abgerundeten Bereich gegenüberliegt. Dieser abgerundete Bereich trägt zur Abstützung bei, während die Schneide 2 die Bearbeitung durchführt.

Im Rahmen des erfindungsgemäßen Verfahrens wird zum Schleifen des Rohlings bevorzugterweise eine metallgebundene Schleifscheibe mit CBN-Schleifkorn verwendet, sofern der Rohling aus einem nicht rostenden Edelstahl oder Federstahl gefertigt wird. Wird der Rohling aus einer Nickel-Titan-Legierung hergestellt, so wird bevorzugterweise eine kunstharzgebundene Schleifscheibe mit Diamant-Schleifkorn verwendet. Die Korngrößen der Schleifscheiben liegen bevorzugterweise zwischen 46 und 76 µm.

Besonders vorteilhafte Bearbeitungsparameter sind erfindungsgemäß dann gegeben, wenn eine Schnittgeschindigkeit von 27 m/sec und ein Vorschub von 0,04 m/min bei einem Rohling aus nicht rostendem Stahl vorgesehen sind. Bei einem Rohling aus einer Nickel-Titan-Legierung ist es besonders vorteilhaft, wenn die Schnittgeschwindigkeit 45 m/sec und der Vorschub 0,08 m/min betragen.

Es versteht sich, daß die Darstellungen der Fig. 2 bis 4 den Darstellungen der Fig. 8 bis 10 entsprechen. In den Fig. 8 bis 10 wurde darauf verzichtet, die Abrundungen zu den unbearbeiteten Umfangsbereichen des Rohlings sowie die exakte Ausgestaltung der Schneide (siehe Fig. 2) im einzelnen zu zeigen. Die Fig. 8 bis 10 dienen somit insbesondere dem besseren Verständnis der Erfindung, während die Fig. 2 bis 4 eine exaktere Darstellung der jeweiligen Querschnitte im fertigbearbeiteten Zustand wiedergeben. Die gezeigten Abrundungen dienen insbesondere der Engratung und der besseren Handhabung des Wurzelkanalinstruments.

## Patentansprüche

1. Wurzelkanalinstrument, welches einen mit Schneiden (2) versehenen Arbeitsteil (1) aufweist, wobei der Arbeitsteil (1) um seinen Umfang verteilt an seinem Querschnitt eine oder mehrere Schneiden (2) aufweist, und wobei das Instrument ein als Spitze (3) bezeichnetes freies Ende des Arbeitsteiles (1) aufweist, wobei die Spitze (3) als gerundete Kuppe ausgebildet ist, und wobei der an die Spitze (3) anschließende Übergangsbereich (4) des Arbeitsteiles (1) über eine als Führungsabschnitt (7) bezeichnete Länge ausschließlich in einem Bereich von höchstens 180° seines Umfanges materialabtragend ausgestaltet ist, wobei der Arbeitsteil (1) zwei oder mehr schraubenartig umlaufende Schneiden (2) aufweist, **dadurch gekennzeichnet, dass** im Führungsabschnitt (7) lediglich eine Schneide (2) angeordnet ist und der Führungsabschnitt (7) zur Spitze (3) hin eine stärker sich verjüngende Konizität aufweist als der übrige Arbeitsteil (1).

2. Wurzelkanalinstrument nach Anspruch 1, **dadurch gekennzeichnet, daß** die zwei oder mehr Schneiden (2) an dem Umfang des Arbeitsteiles (1) ungleichmäßig voneinander beabstandet sind.

3. Wurzelkanalinstrument nach Anspruch 1 oder 2, **dadurch gekennzeichnet, daß** der Arbeitsteil (1) zwei Schneiden (2) an seinem Umfang aufweist.

4. Wurzelkanalinstrument nach Anspruch 1 oder 2, **dadurch gekennzeichnet, daß** der Arbeitsteil (1) drei Schneiden (2) an seinem Umfang aufweist, die gleichmäßig voneinander beabstandet sind.

5. Verfahren zur Herstellung eines Wurzelkanalinstruments, welches einen mit zwei oder mehr schraubenartig umlaufenden Schneiden (2) versehenes Arbeitsteil (1) aufweist, an den sich ein Führungsabschnitt (7) mit lediglich einer Schneide (2) anschließt, welcher zu einer Spitze (3) des Wurzelkanalinstruments in eine stärker sich verjüngende Konizität als der übrige Arbeitsteil (1) aufweist, wobei der Führungsabschnitt (7) ausschließlich in einem Bereich von höchstens 180° seines Umfangs materialabtragend ausgebildet ist,
wobei aus einem Ausgangsmaterial ein Zylinder (9) hergestellt wird,
wobei der Zylinder (9) mittels eines Schleifvorgangs mit einer Spitze (3) versehen wird und anschließend an die Spitze (3) mittels eines Schleifvorgangs ein kegelstumpfartiger Bereich (10) ausgebildet wird, der die oben beschriebenen unterschiedlichen Konizitäten aufweist,
wobei in einem nachfolgenden Arbeitsschritt der Zylinder (9) mit dem kegelstumpfartigen Bereich (10) um seine Längsachse (14) gedreht wird und mittels einer rotierenden, längs des Zylinders (9) mit dem kegelstumpfartigen Bereich (10) bewegten Schleifscheibe (12) zur Ausbildung einer Nut (11) geführt wird,
wobei der Zylinder (9) mit dem kegelstumpfartigen Bereich (10) nachfolgend indexiert wird und zur Ausbildung einer weiteren Nut (11) eine rotierende Schleifscheibe (12) längs des Zylinders (9) mit dem kegelstumpfartigen Bereich (10) geführt wird.

6. Verfahren nach Anspruch 5, **dadurch gekennzeichnet, daß** der Schleifvorgang mehrfach wiederholt wird.

7. Verfahren nach einem der Ansprüche 5 oder 6, **dadurch gekennzeichnet, daß** beim Schleifen der letzten Nut (11) je nach ISO-Größe des Instrumentes eine Länge von ca. 0,5 - 2,5 mm im vorderen, eines an der Spitze (3) anschließenden Führungsabschnitts (7) entsteht, der an der einen Seite keinen Materialabtrag bewirkt, an der anderen Seite jedoch abträgt und so für eine zuverlässige Aufbereitung gekrümmter Wurzelkanäle (8) sorgt, von der Schleifscheibe (12) unbearbeitet bleibt.

8. Verfahren nach Anspruch 7, **dadurch gekennzeichnet, daß** in dem ca. 0,5 - 2,5 mm langen Teil ein Führungsabschnitt (7) ausgebildet wird, der an der einen Seite keinen Materialabtrag bewirkt, an der anderen Seite jedoch abträgt und so für eine zuverlässige Aufbereitung gekrümmter Wurzelkanäle (8) sorgt.

9. Verfahren nach einem der Ansprüche 5 bis 8, **dadurch gekennzeichnet, daß** zum Schleifen der Nuten (11) eine metallgebundene Schleifscheibe mit CBN-Schleifkorn eingesetzt wird.

10. Verfahren nach einem der Ansprüche 5 bis 8, **dadurch gekennzeichnet, daß** zum Schleifen der Nuten (11) eine kunstharzgebundene Schleifscheibe mit Diamant-Schleifkorn eingesetzt wird.

11. Verfahren nach einem der Ansprüche 5 bis 10, **dadurch gekennzeichnet, daß** zum Schleifen der Nuten (11) eine Schleifscheibe (12) mit einer Korngröße zwischen 46 und 76 µm verwendet wird.

12. Verfahren nach einem der Ansprüche 5 bis 11, **dadurch gekennzeichnet, daß** zur Herstellung eines Wurzelkanalinstruments aus nicht rostendem Stahl für die Ausbildung der Nuten (11) bzw. der Schneiden (2) eine Schnittgeschwindigkeit von 27 m/sec und ein Vorschub von 0,04 m/min verwendet werden.

13. Verfahren nach einem der Ansprüche 5 bis 11, **dadurch gekennzeichnet, daß** zur Herstellung eines Wurzelkanalinstruments aus einer Nickel-Titan-Legierung für die Ausbildung der Nuten (11) bzw. der Schneiden (2) eine Schnittgeschwindigkeit von 45 m/sec und ein Vorschub von 0,08 m/min verwendet werden.

## Claims

1. Root canal instrument which has a working portion (1) provided with cutting edges (2), wherein the working portion (1) has one or more cutting edges (2) distributed over its circumference on its cross-section and wherein the instrument has a free end of the working portion (1) referred to as the tip (3), wherein the tip (3) is designed as a rounded crown, and wherein the transition region (4) of the working portion (1) adjoining the tip (3) is designed to remove material over a length referred to as a guide section (7) exclusively in a region of at most 180° of its circumference, wherein the working portion (1) has two or more cutting edges (2) extending helically round the periphery, **characterised in that** only one cutting edge (2) is arranged in the guide section (7) and the guide section (7) has a conicity tapering more sharply towards the tip (3) than the remainder of the working portion (1).

2. Root canal instrument according to claim 1, **characterised in that** the two or more cutting edges (2) are unevenly spaced apart on the circumference of the working portion (1).

3. Root canal instrument according to claim 1 or 2, **characterised in that** the working portion (1) has two cutting edges (2) on its circumference.

4. Root canal instrument according to claim 1 or 2, **characterised in that** the working portion (1) has three cutting edges (2) on its circumference, which are evenly spaced apart.

5. Method for the manufacture of a root canal instrument having a working portion (1) which is provided with two or more cutting edges (2) extending helically round the periphery and which is adjoined by a guide section (7) with only one cutting edge (2) which has a conicity tapering more sharply towards a tip (3) of the root canal instrument than the remainder of the working portion (1), wherein the guide section (7) is designed to remove material exclusively in a region of at most 180° of its circumference,
wherein a cylinder (9) is made from a starting material,
wherein the cylinder (9) is provided with a tip (3) by means of a grinding operation, and adjoining the tip (3) is formed, by means of a grinding operation, a frustoconical region (10) which exhibits the different conicities described above,
wherein in a subsequent working step the cylinder (9) with the frustoconical region (10) is rotated about its longitudinal axis (14) and guided by means of a rotating grinding disc (12) moved along the cylinder (9) with the frustoconical region (10) to form a groove (11),
wherein the cylinder (9) with the frustoconical region (10) is then indexed and a rotating grinding disc (12) is guided along the cylinder (9) with the frustoconical region (10) to form a further groove (11).

6. Method according to claim 5, **characterised in that** the grinding operation is repeated several times.

7. Method according to either of claims 5 or 6, **characterised in that** during grinding of the last groove (11), depending on the ISO size of the instrument, a length of approx. 0.5 - 2.5 mm is left untreated by the grinding disc (12) in the front of a guide section (7) which adjoins the tip (3) and which causes no removal of material on one side, but removes material on the other side and so ensures reliable treatment of curved root canals (8).

8. Method according to claim 7, **characterised in that** in the portion approx. 0.5 - 2.5 mm long is formed a guide section (7) which causes no removal of material on one side, but removes material on the other side and so ensures reliable treatment of curved root canals (8).

9. Method according to any of claims 5 to 8, **characterised in that** a metal-bonded grinding disc with CBN abrasive grit is used for grinding the grooves (11).

10. Method according to any of claims 5 to 8, **characterised in that** a synthetic resin-bonded grinding disc with diamond abrasive grit is used for grinding the grooves (11).

11. Method according to any of claims 5 to 10, **characterised in that** a grinding disc (12) with a particle size between 46 and 76 µm is used for grinding the grooves (11).

12. Method according to any of claims 5 to 11, **characterised in that**, for the manufacture of a root canal instrument made of stainless steel, a cutting speed of 27 m/s and an advance rate of 0.04 m/min are used to form the grooves (11) or cutting edges (2).

13. Method according to any of claims 5 to 11, **characterised in that**, for the manufacture of a root canal instrument made of a nickel-titanium alloy, a cutting speed of 45 m/s and an advance rate of 0.08 m/min are used to form the grooves (11) or cutting edges (2).

## Revendications

1. Instrument pour canal radiculaire, présentant une partie active (1) munie de lames (2), la partie active (1) présentant une ou plusieurs lames (2) réparties sur sa circonférence au niveau de sa section transversale, et l'instrument présentant une extrémité libre, appelée pointe (3), de la partie active (1), la pointe (3) étant réalisée comme un bout arrondi, et la zone de transition (4), adjacente à la pointe (3), de la partie active (1) étant sur une longueur appelée section de guidage (7), exclusivement dans une zone d'un maximum de 180° de sa circonférence, configurée pour l'érosion, la partie active (1) présentant deux ou plusieurs lames (2) s'étendant de façon hélicoïdale, **caractérisé en ce que** dans la section de guidage (7), une seule lame (2) est disposée et la section de guidage (7) présente en direction de la pointe (3) une conicité plus effilée que le reste de la partie active (1).

2. Instrument pour canal radiculaire selon la revendication 1, **caractérisé en ce que** les deux ou plusieurs lames (2) sont espacées de facon irrégulière les unes par rapport aux autres sur la circonférence de la partie active (1).

3. Instrument pour canal radiculaire selon la revendication 1 ou 2, **caractérisé en ce que** la partie active (1) présente deux lames (2) sur sa circonférence.

4. Instrument pour canal radiculaire selon la revendication 1 ou 2, **caractérisé en ce que** la partie active (1) présente trois lames (2) sur sa circonférence qui sont espacées de facon régulière les unes par rapport aux autres.

5. Procédé de fabrication d'un instrument pour canal radiculaire qui présente une partie active (1) munie de deux ou plusieurs lames (2) s'étendant de façon hélicoïdale, suivie d'une section de guidage (7) avec une seule lame (2), la section présentant en direction d'une pointe (3) de l'instrument pour canal radiculaire une conicité plus effilée que le reste de la partie active (1), la section de guidage (7) étant réalisée pour l'érosion exclusivement dans une zone d'un maximum de 180° de sa circonférence,
un cylindre (9) étant fabriqué à partir d'un matériau de départ,
le cylindre (9) étant muni d'une pointe (3) au moyen d'une opération de meulage, et ensuite, une zone tronconique (10) est réalisée sur la pointe (3) au moyen d'une opération de meulage, la zone tronconique présentant lesdites différentes conicités,
dans une étape suivante, le cylindre (9) avec la zone tronconique (10) étant amené à tourner autour de son axe longitudinal (14), et étant guidé au moyen d'une meule tournante (12), mobile le long du cylindre (9) avec la zone tronconique (10), pour réaliser une rainure (11),
le cylindre (9) avec la zone tronconique (10) étant par la suite indexé, et une meule tournante (12) étant guidée la long du cylindre (9) avec la zone tronconique (10) pour réaliser une autre rainure (11).

6. Procédé selon la revendication 5, **caractérisé en ce que** l'opération de meulage est répétée plusieurs fois.

7. Procédé selon l'une quelconque des revendications 5 ou 6, **caractérisé en ce que** pendant la meulage de la dernière rainure (11), en fonction de la dimension ISO de l'instrument, une longueur d'environ 0,5 à 2,5 mm est créée dans la section de guidage avant (7), adjacente à la pointe (3), qui ne provoque aucune érosion d'un côté mais érode de l'autre côté et assure ainsi une préparation fiable de canaux radiculaires incurvés (8), restant non traitée par la meule (12).

8. Procédé selon la revendication 7, **caractérisé en ce que** dans la partie d'une longueur d'environ 0,5 à 2,5 mm, une section de guidage (7) est réalisée qui ne provoque aucune érosion d'un côté mais érode de l'autre côté et assure ainsi une préparation fiable de canaux radiculaires incurvés (8).

9. Procédé selon l'une quelconque des revendications 5 à 8, **caractérisé en ce que** pour le meulage des rainures (11), une meule à liant métallique et à grain abrasif de nitrure de bore cristallin est mise en oeuvre.

10. Procédé selon l'une quelconque des revendications 5 à 8, **caractérisé en ce que** pour le meulage des rainures (11), une meule à liant en résine synthétique et à grain abrasif de diamant est mise en oeuvre.

11. Procédé selon l'une quelconque des revendications 5 à 10, **caractérisé en ce que** pour le meulage des rainures (11), une meule (12) d'une grosseur de grain entre 46 et 76 µm est utilisée.

12. Procédé selon l'une quelconque des revendications 5 à 11, **caractérisé en ce que** pour la fabrication d'un instrument pour canal radiculaire en acier inoxydable, on utilise pour la réalisation des rainures (11) ou des lames (2) une vitesse de coupe de 27 m/s et une avance de 0,04 m/min.

13. Procédé selon l'une quelconque des revendications 5 à 11, **caractérisé en ce que** pour la fabrication d'un instrument pour canal radiculaire à partir d'un alliage nickel/titane, on utilise pour la réalisation des rainures (11) ou des lames (2) une vitesse de coupe de 45 m/s et une avance de 0,08 m/min.
